# EUROPÄISCHE PATENTSCHRIFT

(11) **EP 1 240 821 B1**
(45) Veröffentlichungstag und Bekanntmachung des Hinweises auf die Patenterteilung: **17.01.2007**
(21) Anmeldenummer: 02005783.2
(22) Anmeldetag: 13.03.2002
(51) Int. Cl.: A01K 1/015

(54) **Tierstreu**
Animal litter
Litière pour animaux

(30) Priorität: 15.03.2001 DE 10113068
(43) Veröffentlichungstag der Anmeldung: 18.09.2002
(73) Patentinhaber: H. von Gimborn GmbH, 46446 Emmerich (DE)
(72) Erfinder: Haimerl, Agnes, 84091 Attenhofen (DE); Haubensak, Otto, 83098 Brannenburg (DE); Huber, Werner, 85368 Moosburg (DE); Simmler-Hübenthal, Hubert, 85368 Moosburg (DE)
(74) Vertreter: Splanemann Reitzner Baronetzky Westendorp

(56) Entgegenhaltungen:
- DE-U- 29 800 303

## Beschreibung

Die Erfindung betrifft eine Tierstreu bzw. Hygienestreu, insbesondere eine Katzenstreu, auf der Basis von anorganischen Sorbentien und deren Gemischen.

Es werden bereits Tierstreumaterialien angeboten, welche geruchs- oder hygieneverbessernde Zusätze enthalten. Hierbei handelt es sich um kostengünstige, synthetische Standardpräparate mit bakterizider oder bakteriostatischer Wirkung, die auch in Desinfektionslösungen Verwendung finden. Meist sind dies bakterizid wirkende Schwermetallsalze oder halogenierte organische Verbindungen, welche oft ein hohes Potential an Toxizität und/oder Umweltschädlichkeit aufweisen.

Die US-A-4,494,582 beschreibt ein festes Adsorbens, welches mit einem bakteriostatisch wirksamen halogenierten aromatischen Kohlenwasserstoff imprägniert ist. In der US-A-4,341,180 wird die Verwendung von Cetylpyridiniumchlorid oder Cetalkoniumchlorid als bakterizide Wirkstoffe beschrieben. Die US-A 4,622,920 beschreibt ebenso wie die EP-A-201 209 ein anorganisches Adsorbens, welches Paraben (p-Hydroxybenzoat) bzw. alternative Benzoesäureester enthält. Ferner beschreibt die US-A-5,109,805 die Verwendung von Bronopol (2-Brom-2-nitro1,3-propandiol).

Das DE 296 00 587 U1 beschreibt eine organische Tierstreu, welche mit einem Extrakt aus Malaleuceen (Teebaumöl) besprüht wird. Derartige Zusätze haben sich wegen ihrer geringen bakteriostatischen Wirksamkeit und aus Kostengründen bislang nicht durchsetzen können.

Weiterhin wurden Tierstreuen Duftstoffe zugesetzt, welche die bei ihrer Verwendung entstehenden unangenehmen Gerüche überdecken sollen. So beschreibt die GB-A-2,291,774 eine Mischung aus Bentonit und Perlit, welche mit Duftstoffen und/oder nicht näher spezifizierten antimikrobiellen Zusätzen versetzt werden kann. Die Akzeptanz solcher Produkte bei Mensch und Tier ist fraglich, der Hygieneaspekt bleibt gänzlich unberührt.

Aufgabe der vorliegenden Erfindung ist somit die Bereitstellung einer Tierstreu mit verbessertem Hygienestatus, wobei der Anspruch der Natürlichkeit der Streu erhalten bleiben soll. Die Besiedelung der Streu mit Bakterien und Pilzen soll wirksam und anhaltend reduziert werden, um die Entstehung von Gerüchen zu reduzieren, allergisch bedingte Reaktionen der Verbraucher, z.B. durch Pilzsporen, sollen vermieden werden und die Ergiebigkeit der Streu soll durch verlängerte Nutzungsdauer erhöht werden.

Gegenstand der Erfindung ist somit eine Tierstreu bzw. Hygienestreu auf der Basis von einem oder mehreren anorganischen Sorbentien und deren Gemischen, enthaltend Hopfen (Humulus lupulus L.) und/oder mindestens ein Hopfenverarbeitungsprodukt als natürliches und somit umweltverträgliches biostatisches bzw. biozides Mittel.

Bei den anorganischen Sorbentien handelt es sich vorzugsweise um silicatische Sorbentien, wie Calciumsilicat, Tonmineralien, wie Bentonit, Hectorit, Glauconit, Sauconit oder Illit; Palygorskit (Attapulgit) oder Sepiolith. Weitere geeignete anorganische Sorbentien sind Zeolithe, synthetische Silicate und Polykieselsäuren. Bevorzugt werden in vielen Fällen Schichtsilicate, wie Bentonite oder Attapulgit/Palygorskit.

Die erfindungsgemäße Tierstreu kann zusätzlich zu den anorganischen Sorbentien auch organische Sorbentien, wie Holzmehl, Papierfasern oder Cellulosefasern, enthalten, wodurch das spezifische Gewicht erniedrigt wird. Beispiele für derartige Tierstreuen mit anorganischen und organischen Sorbentien sind in den DE-A-4 311 488, 4 327 159, 4 338 362, 19 653 152 und der EP-A-0 663 793 beschrieben.

Unter Hopfen bzw. Hopfenverarbeitungsprodukten wird im Rahmen der vorliegenden Erfindung sowohl ein Pflanzenmaterial des Hopfens, z.B. Hopfenblüten, -dolden, -spelzen, -blätter oder -ranken, oder Teile davon, als auch ein aus Hopfen oder Pflanzenteilen gewonnenes Produkt in fester oder flüssiger Form verstanden.

Bevorzugt werden im Rahmen der vorliegenden Erfindung Hopfen blüten oder Hopfenextrakte, insbesondere Hopfen-Baseextrakt oder darin enthaltene Wirkstoffe eingesetzt. Wichtige Inhaltsbzw. Wirkstoffe des Hopfens sind die sog. Humulone (Humulon, Cohumulon, Adhumulon, Prehumulon und Posthumulon), auch als α-Säuren bezeichnet, und die Lupulone (Lupulon, Colupulon, Adlupulon, Prelupulon, Postlupulon), auch als β-Säuren bezeichnet. Vorzugsweise werden Lupulon, Humulon oder Isohumulon sowie deren Gemische eingesetzt. Diese Wirkstoffe enthaltende Hopfenverarbeitungsprodukte sind im Handel erhältlich und dem Fachmann bekannt. Nach einer bevorzugten Ausführungsform enthält die erfindungsgemäße Tier- bzw. Hygienestreu einen Extrakt aus Hopfen.

Eine generelle konservierende Wirkung von Bestandteilen des Hopfens ist im Brauereiwesen seit Alters her bekannt. Über eine Verwendung von Hopfen bzw. Hopfenextrakten zur biostatischen bzw. bioziden Ausrüstung von anorganischen Sorbentien ist bisher nichts bekannt geworden.

Es wurde nun überraschend gefunden, dass bestimmte Wirkstoffe aus Hopfen bzw. Hopfenblüten eine hervorragende biostatische, und in einigen Fällen auch antibiotische bzw. biozide Wirkung aufweisen, wenn sie in anorganische Sorbentien eingebracht bzw. auf diese aufgebracht werden. Erfindungsgemäß können Hopfen bzw. Hopfenverarbeitungsprodukte, die die geeigneten Wirkstoffe enthalten, in beliebiger Form den festen Trägersubstanzen bzw. Sorbentien zugesetzt werden. Die Einbringung von Hopfen bzw. Pflanzenteilen des Hopfens bietet in vielen Fällen den Vorteil, dass diese Materialien, in vorgetrockneter und zerkleinerter Form gleichzeitig die Funktion eines flüssigkeitsaufsaugenden festen Trägermaterials bzw. eines Adsorbens in der Streu übernehmen können und quasi von Natur aus bakteriostatisch und hygienefördernd sind.

Wie vorstehend erwähnt, werden nach einer weitern bevorzugten Ausführungsform Extrakte aus Hopfen bzw. Hopfenblüten eingesetzt, die eine gewisse Anreicherung der umweltverträglichen biostatischen bzw. bioziden Wirkstoffe enthalten.

Beispielsweise ist aus Rybazek, V.: Hop Production. Development in Crop Science 16, Elsevier Science Publishers, 1991, die Gewinnung verschiedener Hopfenextrakte sowie hieraus gewonnener Aufbereitungs- bzw. Verarbeitungsprodukte, wie die Fraktionen der α- und iso-α-Säure sowie β-Säure in Form von Hopfen-Baseextrakt bekannt.

Der Hopfen-Rohextrakt enthält u.a. bakteriostatische bzw. antibiotische oder bakteriozide Wirkstoffe wie Humulon oder α-Säure, Lupulon oder β-Säure, und/oder Isohumulon.

Nach einer besonders bevorzugten Ausführungsform wird ein natürliches Gemisch aus α- und β-Säuren, wie es in kommerziellen Hopfenextrakten vorliegt, verwendet. Solche Hopfenextrakte sind jedoch, genau wie die vorstehend erwähnten Baseextrakte, die im wesentlichen nur die β-Säurefraktion enthalten, nicht wasserlöslich. Vorteilhafterweise werden diese Extrakte daher vorab zu einer Emulsion aufbereitet und anschließend auf die anorganischen Sorbentien aufgebracht.

Bevorzugt werden, falls Hopfenteile oder feste Hopfenverarbeitungsprodukte eingesetzt werden, etwa 1 bis 70 Gew.-%, insbesondere 2 bis 20 Gew.-%, bezogen auf die Gesamtstreu eingesetzt.

Bezogen auf die Hopfenwirkstoffe werden vorzugsweise etwa 5 bis 10.000 ppm, insbesondere 50 bis 2.000 ppm, bezogen auf die folgenden Wirkstoffe, eingesetzt:
Humulon oder α-Säure,
Lupulon oder β-Säure,
Isohumulon oder iso- α-Säure

Isohumulon ist eine gut wasserlösliche Reinfraktion, welche durch Weiterverarbeitung aus Hopfenextrakt mit hohem α-Säureanteil gewonnen wird.

Es wurde überraschend gefunden, dass im Hopfen und in vielen Hopfenverarbeitungsprodukten, wie Hopfenextrakt, insbesondere dem Isoextrakt und dem Baseextrakt, weitere Inhaltsstoffe enthalten sind, die der Hygienestreu einen für Haustiere offenbar angenehmen Geruch verleihen und/oder der Neutralisierung bzw. Überdeckung von unangenehmen Gerüchen dienen können.

Weiterhin wurde gefunden, dass bestimmte im Hopfen bzw. dessen Verarbeitungsprodukten enthaltene Wirkstoffe offenbar eine besonders gute Wirksamkeit gegen die mit Urin und Kot von Haustieren assoziierten Mikroorganismen aufweisen, die einerseits zu unangenehmen Gerüchen führen und andererseits aus Hygienegesichtpunkten bedenklich sind.

Es wird angenommen, dass beim Ein- bzw. Aufbringen in/auf die anorganischen Sorbentien eine besonders vorteilhafte Verteilung bzw. Festlegung der aktiven Wirkstoffe in den bzw. auf der Oberfläche der anorganischen Sorbentien erfolgt. Bis zur Befeuchtung der Sorbentien mit Urin oder Kot sind die Wirkstoffe äußerst stabil und überdauern auch eine längere Lagerung ohne erheblichen Aktivitätsverlust. Dieser Aktivitätsverlust wäre zu erwarte, da die bakteriostatisch wirksamen Inhaltsstoffe des Hopfens empfindlich gegenüber oxidativem Abbau sind. Beim Aufsaugen des Urins bzw. des im Kot enthaltenen Wassers durch das anorganische Sorbens wird offenbar durch die gleichzeitige Anwesenheit der Hopfenwirkstoffe in bzw. an den anorganischen Sorbentien eine besonders gute hygienefördernde Wirkung sichergestellt. Überraschend haben sich natürliche oder synthetische Schichtsilicate als besonders wirksam im Zusammenspiel mit dem Hopfen bzw. Hopfenverarbeitungsprodukt erwiesen. Es wird angenommen, dass zumindest teilweise eine Einlagerung der Wirkstoffe des Hopfens zwischen die Schichten des Schichtsilicats erfolgt, und die Wirkstoffe dann bei der Befeuchtung in geeigneter Weise freigesetzt werden und die Vermehrung von Keimen und die Entwicklung von unangenehmen Gerüchen hemmen bzw. unterbinden.

Nach einer besonders bevorzugten Ausführungsform werden Lupulon und Humulon gemeinsam eingesetzt (auch in Form eines beide Wirkstoffe enthaltenden Hopfenverarbeitungsproduktes), um eine besonders hygienefördernde Tierstreu zu erhalten.

Die erfindungsgemäße Tierstreu liegt vorzugsweise in Granulat form vor. Je nach Beschaffenheit und bevorzugtem Herstellungsverfahren können der Hopfen bzw. die Hopfenverarbeitungsprodukte in fester Form oder flüssig in Form einer Suspension, Emulsion oder Lösung ein- bzw. aufgebracht werden.

Nach einer besonders bevorzugten Ausführungsform wird das anorganische Sorbens bzw. das Tierstreu-Granulat mit einem Hopfenextrakt besprüht.

Gegenstand der Erfindung ist ferner ein Verfahren zur Herstellung der vorstehend definierten Tierstreu.

Das Verfahren ist dadurch gekennzeichnet, dass man mindestens ein anorganisches Sorbens in Form von feinen Teilchen oder in Form einer feuchten Masse oder ein Gemisch davon, gegebenenfalls mit weiteren Zusatzstoffen granuliert, wobei
a) vor oder während der Vermischung oder Granulation Hopfen bzw. feste Hopfenbestandteile oder -verarbeitungsprodukte zugegeben werden, und/oder
b) vor, während oder nach der Granulation als Flüssigkeit vorliegende Hopfenverarbeitungsprodukte, vorzugsweise in Form einer Lösung, Suspension oder Emulsion, zumindest auf die Oberfläche der Sorbentien bzw. Granulate aufgebracht werden. Gegenstand der Erfindung ist schließlich auch die Verwendung von Hopfen oder Hopfenverarbeitungsprodukten in einer Tierstreu bzw. Hygienestreu.

Die Erfindung ist durch die nachstehenden Beispiele erläutert:

### Beispiel 1

Es wurden jeweils 5 kg
I) Ca-Bentonit mit einer spezifischen Oberfläche von 63 m²/g (bestimmt nach BET, DIN 66132) und einem Feuchtigkeitsgehalt von 8,5 Gew.-%, bzw.
II) Sepiolith mit einer spezifischen Oberfläche von 188 m²/g und einem Feuchtigkeitsgehalt von 6,5 Gew.-%
in Form von Granulaten mit einer 20 %igen Emulsion von Hopfen-Baseextrakt, erhalten durch Emulgieren von 50 g Baseextrakt mit 62 % β-Säureanteil in 200 g einer 10 %igen Lösung von Tween 20, besprüht, so dass in der fertigen Streu 484 ppm (a) bzw. 1452 ppm (b) Baseextrakt (entspricht 300 (a) bzw. 900 ppm (b) des Wirkstoffs β-Säure) enthalten waren.

Nach 30minütigem Trocknen bei 65°C wurden jeweils 2 g unbehandeltes Granulat sowie je 2 g der Granulate I und II pulverisiert, zu 1 ml einer Bakterienlösung, enthaltend etwa 5,7 x 10⁵ Keime des Harnstoff-spaltenden Mikroorganismus *Sporosarcina* *ureae*/ml gegeben und bei Raumtemperatur gerührt. Nach einer Einwirkungszeit von 24 Stunden wurde die Suspension auf ein agarhaltiges Nährmedium aufgestrichen und nach 24-stündiger Bebrütung bei 35°C die Zahl der in der Suspension verbliebenen Keime als koloniebildende Einheiten (KBE) auf den Kulturplatten bestimmt. Es wurde folgende Reduktion der Keimzahl gegenüber unbehandelter Streu festgestellt.

**Tabelle 1**

| Streu-Varianten | | KBE je Agarplatte (%) |
|---|---|---|
| I. | a) Ca-Bentonit-Granulat + 300 ppm β-Säure | 77 |
| | b) Ca-Bentonit-Granulat + 900 ppm β-Säure | 33 |
| II. | a) Sepiolith-Granulat + 300 ppm β-Säure | 79 |
| | b) Sepiolith-Granulat + 900 ppm β-Säure | 42 |
| Kontrolle I. unbehandeltes Ca-Bentonit-Granulat | | 100 |
| Kontrolle II. unbehandeltes Sepiolith-Granulat | | 100 |

Mit den Restmengen (4,9 kg) der mit Hopfenextrakt besprühten Sorbentien (Ia) und (Ib) wurden Praxistests durchgeführt. Dazu wurde die Streu in übliche Katzentoiletten gefüllt, die über 48 Stunden von je zwei Katzen benutzt wurden. Nach dieser Zeit wurde die Gesamt-Keimbelastung an einer repräsentativen Probe der Streu wie oben im Vergleich zu der selben Menge an unbehandelter, ebenfalls von zwei Katzen über 48 Stunden benutzten Streu bestimmt. Es ergab sich eine Reduktion der Keimzahl um 34 % (Ia) bzw. 61 % (Ib).

Mit den Restmengen (4,9 kg) der mit Hopfenextrakt besprühten Sorbentien (IIa) und (IIb) wurde die Akzeptanz dieser Streu gegenüber Katzen getestet. Hierzu wurden insgesamt sechs Katzen über einen Zeitraum von zehn Tagen drei Toiletten nebeneinander angeboten. Eine enthielt die vorstehend unter Beispiel 1 beschriebene herkömmliche Tierstreu ohne Zusatz von Hopfen bzw. Hopfenverarbeitungsprodukten, eine andere enthielt die in Beispiel I beschriebene mit 484 ppm Baseextrakt imprägnierte Streu (IIa) und die dritte Toilette die in Beispiel I beschriebene, mit 1452 ppm Baseextrakt imprägnierte Streu (IIb). Über den Beobachtungszeitraum hinweg wurde erfasst, wie häufig die jeweilige Toilette von der/den Katzen(n) benutzt wurde. Es zeigte sich eine leichte, aber signifikante Bevorzugung der Katzentoilette mit der Hopfenbaseextrakt enthaltenden Streu durch die Katzen, die über den Versuchszeitraum zunahm. Wahrscheinlich ist dies auf eine verbesserte Hygienesituation in den mit erfindungsgemäßen Hygienestreu beschickten Katzentoiletten zurückzuführen.

### Beispiel 2

Es wurden in jeweils 20 kg (a) Calciumbentonit bzw. (b) einer natürlichen Mischung aus etwa 40 Gew.-% Bentonit und 60 Gew.-% Palygorskit (Hormit; Fundstätte, Meigs, Georgia/USA), deren Feuchtigkeitsgehalt auf 30 Gew.-% eingestellt worden war, über einen Zeitraum von 10 Minuten 1700 g vorvermahlene getrocknete Hopfenblüten (-dolden) in einem Werner-Pfleiderer-Mischer eingearbeitet und extrudiert. Anschließend wurden die Extrudate bei 65°C bis auf einen Restfeuchtegehalt von 8 Gew.-% getrocknet und gebrochen. Die Kornfraktion von 1,5 bis 5 mm wurde abgesiebt. Das Fertigprodukt enthält 10 Gew.-% Hopfenblüten. Eine Teilmenge von jeweils 2 g wurde wie nach Beispiel 1 pulversiert und in eine *Sporosarcina ureae*-Lösung gegeben. Nach 24 Stunden wurde eine Reduzierung der Keimzahl um 37 % (a) bzw. 45 % (b) festgestellt.

Je 4,9 kg der Granulate wurden wie nach Beispiel 1 in Katzentoiletten getestet, wobei eine Reduktion der Gesamt-Keimzahl um 38 % (a) bzw. 43 % (b) festgestellt wurde.

Es entstanden auch nach 7 Tagen keine unangenehmen Gerüche, während eine herkömmliche Hygienestreu auf Basis eines synthetischen Silicates bereits nach 3 Tagen sehr unangenehm roch, was auf das vermehrte Wachstum von Keimen und deren Stoffwechselprodukte zurückzuführen ist.

### Beispiel 3

5 kg eines Ca-Bentonit-Granulats mit einer Korngröße von 2 bis 5 mm wurden mit einer 10 %igen ethanolischen Lösung eines Roh-Hopfenextraktes, welcher 35,6 % α-Säure und 23,7 % β-Säure enthielt (a, b), bzw. einer 10-%igen wässrigen Formulierung einer Iso-α-Säure (Iso-Humulon, c, d) in einer solchen Menge besprüht, die bezogen auf die fertige Streu einem applizierten Gehalt von
a) 300 ppm β-Säure (Lupulon) + 452 ppm α-Säure (Humulon)
b) 900 ppm β-Säure (Lupulon) + 1353 ppm α-Säure (Humulon)
c) 300 ppm iso-α-Säure (Isohumulon)
d) 900 ppm iso-α-Säure (Isohumulon)
entspricht. Nach dem Besprühen wurden die Granulate wie nach Beispiel 1 getrocknet, pulverisiert und je 2 g in eine *Sporosarcina ureae*-Lösung gegeben. Nach 24 Stunden wurde eine Reduktion der Keimzahl um 32 % (a), 57 % (b), 15 % (c) und 30 % (d) festgestellt.

Die Hauptmenge des Granulats wurde wie nach Beispiel 1 in einer Katzentoilette getestet.

Es zeigten sich auch nach 7 Tagen (a, c) bzw. 10 Tagen (b, d) keine unangenehmen Gerüche, während eine herkömmliche Hygienestreu auf Basis eines synthetischen Silicates bereits nach 5 Tagen sehr unangenehm roch, was auf das vermehrte Wachstum von Keimen und deren Stoffwechselprodukte zurückzuführen ist.

## Patentansprüche

1. Tierstreu, insbesondere Katzenstreu, auf der Basis von anorganischen Sorbentien und deren Gemischen, enthaltend Hopfen und/oder mindestens ein Hopfenverarbeitungsprodukt als umweltverträgliches biostatisches bzw. biozides Mittel.

2. Tierstreu nach Anspruch 1, **dadurch gekennzeichnet, dass** die anorganischen Sorbentien silicatische Sorbentien, wie Calcium silicat, Tonmineralien, wie Bentonit, und/oder Palygorskit, darstellen.

3. Tierstreu nach Anspruch 1 oder 2, **dadurch gekennzeichnet, dass** es sich bei den Hopfenverarbeitungsprodukten um Pflanzenmaterial des Hopfens, insbesondere Hopfenblüten oder Teile davon handelt.

4. Tierstreu nach einem der vorstehenden Ansprüche, **dadurch gekennzeichnet, dass** es sich bei den Hopfenverarbeitungspro- ; dukten um Hopfenextrakte, wie Roh-Extrakt, Hopfen-Baseextrakt oder darin enthaltene Stoffe, insbesondere den Hopfenwirkstoffen Humulon oder α-Säure, Lupulon oder β-Säure, und/oder Isohumulon bzw. deren Gemische handelt.

5. Tierstreu nach einem der vorstehenden Ansprüche, **dadurch gekennzeichnet, dass** sie zusätzlich mindestens ein organisches Sorbens enthält.

6. Tierstreu nach einem der vorstehenden Ansprüche, **dadurch gekennzeichnet, dass** sie in Granulatform vorliegt und das bzw. die Hopfenverarbeitungsprodukte zumindest auf der Oberfläche der Granulate verteilt sind.

7. Tierstreu nach einem der vorstehenden Ansprüche, **dadurch gekennzeichnet, dass** neben Hopfen bzw. dessen Verarbeitungsprodukten weitere biostatische bzw. biozide Mittel, insbesondere Thymol, mindestens eine feste Peroxoverbindung und/oder Salze mit bakteriziden Metallkationen, enthalten sind.

8. Tierstreu nach einem der vorstehenden Ansprüche, **dadurch gekennzeichnet, dass** der (die) enthaltene(n) Hopfenwirkstoff(e) jeweils in einer Menge von etwa 5 bis 10.000 ppm, insbesondere von etwa 50 bis 1.000 ppm enthalten ist (sind).

9. Verfahren zur Herstellung einer Tierstreu nach einem der Ansprüche 1 bis 7, **dadurch gekennzeichnet, dass** man mindestens ein anorganisches Sorbens in Form von feinen Teilchen oder in Form einer feuchten Masse oder ein Gemisch davon, gegebenen falls mit weiteren Zusatzstoffen granuliert, wobei
a) vor oder während der Vermischung oder Granulation Hopfen bzw. feste Hopfenbestandteile oder -verarbeitungsprodukte zugegeben werden,
und/oder
b) vor, während oder nach der Granulation als Flüssigkeit vorliegende Hopfenverarbeitungsprodukte, vorzugsweise in Form einer Lösung, Suspension oder Emulsion, zumindest auf die Oberfläche der Sorbentien bzw. Granulate aufgebracht werden.

10. Verwendung von Hopfen oder Hopfenverarbeitungsprodukten in einer Tierstreu bzw. Hygienestreu.

## Claims

1. Animal litter, in particular cat litter, based on inorganic sorbents and mixtures thereof, containing hops and/or at least one hop processing product as an environmentally compatible biostatic or biocidal medium.

2. Animal litter according to Claim 1, **characterised in that** the inorganic sorbents constitute siliceous sorbents, such as calcium silicate, clay minerals, such as bentonite and/or palygorskite.

3. Animal litter according to Claim 1 or 2, **characterised in that** the hop processing products are vegetable material of the hop, in particular hop flowers or parts thereof.

4. Animal litter according to any one of the preceding Claims, **characterised in that** the hop processing products are hop extracts, such as raw extract, hop base extract or substances contained therein, in particular the hop active ingredients humulone or α-acid, lupolone or β-acid and/or isohumulone or mixtures thereof.

5. Animal litter according to any one of the preceding Claims, **characterised in that** it additionally contains at least one organic sorbent.

6. Animal litter according to any one of the preceding Claims, **characterised in that** it is present in granular form and the hop processing product or products is/are distributed at least on the surface of the granular materials.

7. Animal litter according to any one of the preceding Claims, **characterised in that**, in addition to hops or their processing products, further biostatic or biocidal media are contained, in particular thymol, at least one solid peroxide compound and/or salts with bactericidal metal cations.

8. Animal litter according to any one of the preceding Claims, **characterised in that** the hop active ingredient or ingredients is/are each contained in a quantity of approximately 5 to 10,000 ppm, in particular approximately 50 to 1,000 ppm.

9. A method of producing an animal litter according to any one of Claims 1 to 7, **characterised in that** at least one inorganic sorbent is granulated in the form of fine particles or in the form of a moist material or a mixture thereof, optionally with other additives, wherein
a) before or during the mixing or granulation, hops or solid hop constituents or processing products are added,
and/or
b) before or after the granulation, hop processing products present as a liquid, preferably in the form of a solution, suspension or emulsion, are applied at least to the surface of the sorbents or granular materials.

10. Use of hops or hop processing products in an animal litter or hygiene litter.

## Revendications

1. Litière pour animaux, en particulier litière pour chats, à base de sorbants inorganiques et de mélanges de ceux-ci, contenant du houblon et/ou au moins un produit de traitement du houblon en tant qu'agent biostatique ou biocide non polluant.

2. Litière pour animaux selon la revendication 1, **caractérisée en ce que** les sorbants inorganiques sont constitués par des sorbants silicatés, tels que le silicate de calcium, par des minéraux argileux, tels que la bentonite, et/ou par de la palygorskite.

3. Litière pour animaux selon la revendication 1 ou 2, **caractérisée en ce que** les produits de traitement du houblon sont des matières végétales du houblon, en particulier des fleurs de houblon ou des parties de celles-ci.

4. Litière pour animaux selon l'une des revendications précédentes, **caractérisée en ce que** les produits de traitement du houblon sont des extraits de houblon, tels qu'un extrait brut, un extrait de base du houblon ou des substances contenues dans ceux-ci, en particulier les substances actives du houblon que sont l'humulone ou acide a, la lupulone ou acide β, et/ou l'isohumulone ou des mélanges de ceux-ci.

5. Litière pour animaux selon l'une des revendications précédentes, **caractérisée en ce qu'**elle contient en outre au moins un sorbant organique.

6. Litière pour animaux selon l'une des revendications précédentes, **caractérisée en ce qu'**elle se présente sous forme de granulés et **en ce que** les produits de traitement du houblon sont répartis au moins à la surface des granulés.

7. Litière pour animaux selon l'une des revendications précédentes, **caractérisée en ce qu'**elle contient, outre du houblon ou des produits de traitement du houblon, d'autres agents biostatiques ou biocides, en particulier du thymol, au moins un composé peroxo solide et/ou des sels avec des cations métalliques bactéricides.

8. Litière pour animaux selon l'une des revendications précédentes, **caractérisée en ce que** la ou les substances actives du houblon sont contenues chacune en une quantité comprise entre 5 et 10.000 ppm env., en particulier entre 50 et 1.000 ppm env.

9. Procédé de fabrication d'une litière pour animaux selon l'une des revendications 1 à 7, **caractérisé en ce que** l'on granule au moins un sorbant inorganique sous forme de particules fines ou sous forme de masse humide ou d'un mélange de celles-ci, le cas échéant avec d'autres additifs,
a) du houblon ou des composants solides ou des produits de traitement du houblon étant ajoutés avant ou pendant le mélange ou la granulation,
et/ou
b) des produits de traitement du houblon se présentant comme liquides, de préférence sous forme de solution, de suspension ou d'émulsion, étant appliqués au moins à la surface des sorbants ou des granulés avant, pendant ou après la granulation.

10. Utilisation de houblon ou de produits de traitement du houblon dans une litière pour animaux ou une litière hygiénique.
